# EUROPÄISCHE PATENTSCHRIFT

(11) **EP 0 587 651 B1**
(45) Veröffentlichungstag und Bekanntmachung des Hinweises auf die Patenterteilung: **28.02.1996**
(21) Anmeldenummer: 92911289.4
(22) Anmeldetag: 04.06.1992
(51) Int. Cl.: H05B 7/11, H05B 7/144, F27B 3/08

(54) **GLEICHSTROMLICHTBOGENOFEN**
D.C. ARC FURNACE
FOUR A ARC A COURANT CONTINU

(30) Priorität: 06.06.1991 DE 4118756
(43) Veröffentlichungstag der Anmeldung: 23.03.1994
(73) Patentinhaber: MANNESMANN Aktiengesellschaft, D-40027 Düsseldorf (DE)
(72) Erfinder: SCHUNK, Eckart, D-40591 Düsseldorf (DE)
(74) Vertreter: Meissner, Peter E., Dipl.-Ing.
(86) Internationale Anmeldenummer: DE9200463
(87) Internationale Veröffentlichungsnummer: WO9222181

(56) Entgegenhaltungen:
- EP-A- 0 269 465
- WO-A-91/14911
- DE-A- 2 510 326
- DE-A- 4 035 233
- PATENT ABSTRACTS OF JAPAN vol. 14, no. 519 (M-1048)14. November 1990
- PATENT ABSTRACTS OF JAPAN vol. 15, no. 81 (M-1086)25. Februar 1991
- PATENT ABSTRACTS OF JAPAN vol. 14, no. 519 (M-1048)14. November 1990
- PATENT ABSTRACTS OF JAPAN vol. 14, no. 222 (E-926)10. Mai 1990
- PATENT ABSTRACTS OF JAPAN vol. 13, no. 434 (M-875)28. September 1989
- PATENT ABSTRACTS OF JAPAN vol. 14, no. 519 (M-1048)14. November 1990

## Beschreibung

Die Erfindung betrifft einen Gleichstromlichtbogenofen zum Einschmelzen von Schrott nach dem Oberbegriff des Anspruchs 1.

Der Oberbegriff des Anspruchs 1 basiert auf der Druckschrift JP-A-2 302 581.

Bei Gleichstromlichtbogenöfen erfolgt die Stromzufuhr üblicherweise durch Gleichrichter bzw. Thyristoren-Sätze, die an einer Seite des Ofens angeordnet sind. Durch die zum Ofen führenden Stromleiter wird infolge der magnetischen Felder eine Ablenkkraft auf den Lichtbogen ausgeübt. Folge dieser Kraft ist die Schrägstellung des Lichtbogens von der Kathode in Richtung Anode, im wesentlichen von der Seite weg, von der die Stromzufuhr erfolgt.

Durch diese Schrägstellung des Lichtbogens erfolgt eine ungleichmäßige Strahlung und damit ein asymmetrischer Verschleiß des Feuerfestmaterials in der Schlackenzone und eine lokale Überhitzung der sich oberhalb der Schmelze befindenden Ofenwand bzw. wasserführenden Zustellung. In der betrieblichen Praxis hat sich gezeigt, daß die Auswirkungen der Strahlung eines ungeschützten Gleichstromlichtbogens erheblich größer ist als bei bekannten Drehstromanlagen. Das liegt daran, daß der Gleichstromlichtbogen bei gleicher Leistung des Ofens ca. 3mal länger als bei vergleichbaren Drehstromofenanlagen ist. Der radialen Symmetrierung des Gleichstromlichtbogenofens kommt damit eine besondere Bedeutung zu.

Aber auch durch die Beschickung des Ofens mit Schrott kann beim Einschmelzen des Schrottes die Ofenwand unterschiedlich belastet werden. Wenn beispielsweise an einer Seite sich leichter Schrott befindet, der während des Schmelzvorganges früher eingeschmolzen wird, oder sich an einer Stelle kein Schrott befindet, werden in der Nähe befindende Abschnitte der Ofenwand über längere Zeit stärker bestrahlt. Eine solche Bestrahlung durch den Lichtbogen im Vergleich zu Ofenabschnitten, die durch ungeschmolzenen Schrott geschützt werden, wirkt sich negativ hinsichtlich des Wandverschleißes aus. Neben zusätzlichen Strahlungs- und Wärmeverlusten wirkt sich die Strahlung auch hinsichtlich der Schmelzgeschwindigkeit ungünstig aus.

Aus der DE-OS 30 07 879 ist ein mit Gleichstrom betriebener Lichtbogenofen bekannt, bei dem am Gefäß an dem Teil des Ofenmantels, wo die Zuleiter zu dem Bodenkontakt und evtl. zu einer Elektrode verlaufen, ein Blechabschnitt aus ferromagnetischem Material angeordnet ist.

Aus EP-A-0 255 793 ist ein Gleichstromelektroofen bekannt, bei dem zur Abschirmung der durch die Leitung erzeugten Magnetfelder unterhalb des Ofens metallische Platten mit verhältnismäßig hoher magnetischer Permeabilität vorgesehen sind.

Die Maßnahmen aus beiden genannten Schriften zeigen nicht nur wenig Wirkung, sondern sie gestalten die Ofenkonstruktion komplizierter und verteuern die Herstellkosten des Ofengefäßes.

Aus der DE-OS 32 05 270 A1 ist ein Gleichstromlichtbogenofen bekannt, der zur Verhinderung unerwünschter seitlicher Ablenkung des Lichtbogens durch eine im einzelnen vorgegebene Leitungsführung im Bereich des Tragarmes und des Ofengefäßes eine symmetrische Stromzufuhr zu erreichen versucht. Die vorgeschlagene Stromführung erfordert ein hohes Maß an kostenträchtigem Kupfermaterial und schränkt darüber hinaus die Zugänglichkeit des Ofens in unerträglichem Maße ein.

Aus der EP 0 225 200 B1 ist eine Vorrichtung zur Versorgung von zwei elektrischen Lasten mit Gleichstrom mittels einer Gruppe gesteuerter Gleichrichter bekannt, die wenigstens zwei elektrische, eine gemeinsame Polarität aufweisende Lasten speist und eine Gruppe gesteuerter Gleichrichter pro Last umfaßt, wobei jede der Brückenschaltung, die sich auf einer Seite befinden, welche von der Seite der gemeinsamen Polarität abgewandt ist, durch eine individuelle Regelung gesteuert wird. Die gesteuerten Gleichrichter sind dabei parallel an einer gemeinsamen Wechselstromversorgung in Graetz-Brückschaltung angeschlossen. Am Ofengefäß sind drei Kathoden und drei am Boden des Ofengefäßes angeordnete Anoden vorgesehen. Diese Vorrichtung hat den Nachteil in der Verwendung von drei Elektroden, womit thermisch hoch und niedrig beaufschlagte Zonen erzeugt werden. Die Magnetfelder der Zuleitungen erzeugen eine Ablenkung der Lichtbögen zur Ofenmitte. Eine Anregung zur Einflußnahme auf die Lichtbogenform ist dieser Schrift nicht zu entnehmen.

Die DE-A-40 35 233 offenbart einen Gleichstromlichtbogenofen mit einer einzigen Bodenelektrode zu der mehrere Leiter in einer zur Achse der beweglichen und Bodenelektrode senkrechten Ebene in einer bestimmten Verteilung geführt sind, so daß durch Einspeisen bestimmter Stromstärken in die Leiter auf den Verlauf bzw. die Auslenkung des Lichtbogens Einfluß genommen werden kann.

Abgesehen davon, daß der Einfluß auf die Ablenkung des Lichtbogens bei nur einer Bodenelektrode nur gering sein kann, findet hier das Gesamtsystem der Stromzubzw. -abführungen, also für Bodenelektroden und Kathode keine Berücksichtigung.

Die Erfindung widmet sich dem Problem der vollständigen Beeinflussung des Lichtbogens beim Gleichstromlichtbogenofen. Sie hat sich zum Ziel gesetzt, mit einfachen Mitteln aktiv das Brennverhalten des Lichtbogens zu beeinflussen und die metallurgisch mögliche Leistungseinbringung zu erreichen.

Die Erfindung löst diese Probleme durch die Merkmale des Anspruchs 1.

Zweckmäßige Ausgestaltungen sind in den Unteransprüchen angegeben

Bei einem Gleichstromlichtbogenofen mit einer in das Ofengefäß hineinragenden, als Kathode ausgebildeten Elektrode und mindestens zwei Bodenelektroden sowie steuerbaren Gleichrichtern, die über Stromleitungen mit den Bodenelektroden verbunden sind, wobei als Gleichrichter mindestens zwei 6-pulsige Thyristor-Sätze eingesetzt werden, kommen erfindungsgemäß 2, 3 oder 4 von 6-pulsigen Thyristor-Sätzen pro Transformator als Gleichrichter zum Einsatz, deren positiver Lastausgang über separate Stromleitungen zu den einzelnen Bodenelektroden geführt wird.

Die Bodenelektroden sind auf einem gemeinsamen Teilkreis senkrecht zur Kathoden-Mittenachse angeordnet, wobei jeweils zwei Bodenelektroden sich gegenüberliegen und den gleichen Abstand zur Kathoden-Mittenachse aufweisen. Ein Stromleiter zu der Kathode und die Stromleiter zu den Bodenelektroden sind in einer gemeinsamen Ebene geführt.

Die Bodenelektroden sind mit unterschiedlichem Strom ansteuerbar. Mindestens zwei Bodenelektroden sind dabei in der Weise angeordnet, daß sie auf einem Teilkreis in einer Ebene vorgesehen sind, die die Stromzuleitungen bis hin zur Stromversorgung umfaßt. Der Schrägstellung des Lichtbogens, die im wesentlichen von der Seite weg erfolgt, an der sich die Stromzufuhr befindet, kann nunmehr aktiv entgegengewirkt werden. Durch die Ansteuerung der verstellbaren Thyristoren kann die Stromhöhe jeder einzelnen Bodenelektrode nahezu beliebig eingestellt werden. Dabei kann auf verschiedene Regelgrößen zurückgegriffen werden, etwa auf die Temperatur der Gefäßwand, den aktuellen Chargierzeitpunkt, oder auf den Warmhaltewert der Schmelze, u.z. in Abhängigkeit der sich oberhalb der Schmelze befindenden Schlackenhöhe.

Durch den Einsatz von Thyristoren kann eine 6-pulsige, eine 12-pulsige oder 24-pulsige oder noch höhere Gleichrichtung des Stromes erfolgen. Eingesetzt werden in Abhängigkeit von der Trafoausführung bzw. der Schaltqruppe der Thyristoren 2, 3, 4, 6, 8, 9 Bodenelektroden. Durch die Anordnung der als Anode ausgebildeten Bodenelektroden auf einem Teilkreis außerhalb des Zentrums der Kathode, kann bei höherer Anzahl der Anoden der Lichtbogenstrahl in beliebige Richtungen in vorgebbarer Größe abgelenkt werden. Sicher und mit hoher Genauigkeit können so Unsymmetrien des Lichtbogens korrigiert werden.

Auf die Unterbindung der Unsymmetrie wird in Abhängigkeit des Gesamtstromes Einfluß genommen, d.h. bei kleinen Strömen nur geringe und bei großen Strömen größerer Einfluß auf die Unterbindung der Unsymmetrie.

Bei Vorgabe des Gesamtstromes aller beteiligter Elektroden können bei relativen Unterschieden der individuell angesteuerten Anoden einzelne Ströme einen höheren als den mittleren Wert annehmen.

Die Anoden sind auf einem Teilkreis angeordnet, der einen Durchmesser von 0,3 bis 0,6 des Gefäßdurchmessers aufweist und symmetrisch zur Ofenachse angeordnet ist. In einer vorteilhaften Ausgestaltung wird der Teilkreismittelpunkt auf einer Achse Transformator/Ofenmitte angeordnet. Durch diese Maßnahme wird bereits durch die Lage der Anoden ein positiver Einfluß auf die Symmetrierung des Lichtbogens genommen, der dann mit elektrischen Maßnahmen fein abgestimmt werden kann.

Die Stromleitungen sind vorzugsweise aus Kupfer und Aluminium gefertigt. Sie können von einem Kühlmedium durchströmt werden und erlauben damit hohe spezifische Stromdichten.

Die Thyristoren selbst sind als Drehstrom-Brückenschaltung aufgebaut und weisen damit eine kompakte sowie robuste Bauweise auf. In vorteilhafter Weise erfolgt die Regelung der Steuerströme in Abhängigkeit des zeitlichen Verlaufs der Chargierung. Hierbei kann die Stromstärke an die Schrottart und die Schrottverteilung angepaßt werden, beispielsweise beim Vorhandensein von unregelmäßig verteilten festen und im Vergleich zu den übrigen großen Schrottstücken.

Ein Beispiel der Erfindung ist in den Zeichnungen dargelegt. Es zeigen:
- Fig. 1: Schema einer 12-pulsigen Gleichrichtung bei 2 Bodenelektroden,
- Fig. 2: Schema einer 12-pulsigen Gleichrichtung bei 4 Bodenelektroden,
- Fig. 3: Schema einer 24-pulsigen Gleichrichtung bei 4 Bodenelektroden,
- Fig. 4: Skizze der Stromzuführungseinrichtung,

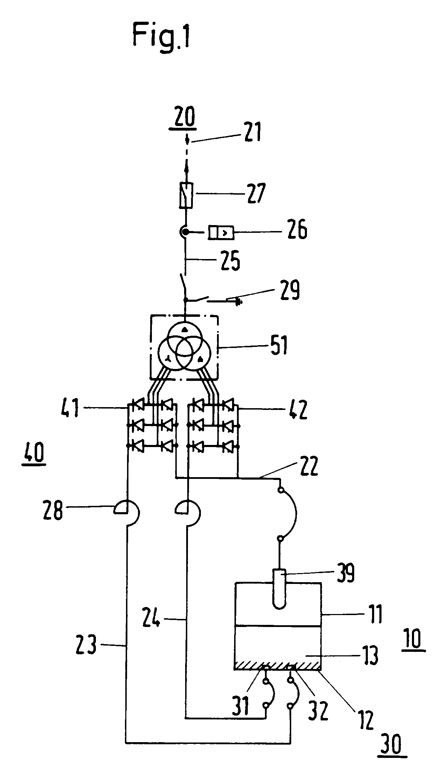

In den Figuren 1 bis 3 ist schematisch ein Gleichstromlichtbogenofen 10 dargestellt, der ein Gefäß 11 aufweist, das mit Schmelze 13 gefüllt ist. Im Gefäßboden 12 des Gefäßes 11 sind Bodenelektroden 30 angeordnet, u.z. die Anoden 31, 32 bzw. 31 bis 34.

Die Energieversorgung 20 erfolgt über eine Drehstromzuleitung 21, die über einen Schalter 27 mit der primärseitigen Leitung verbunden ist. Die primärseitige Leitung 25 weist eine Meßeinrichtung 26 und einen Erdungschalter 29 auf.

Die Fig. 1 zeigt eine Anlage mit einem Trafo 51, bei dem der Strom durch Thyristoren-Sätze 41, 42 12-pulsig gleichgerichtet zwei Bodeneisktroden 31, 32 zugeführt wird. Die Anoden 31, 32 sind dabei über die Laststromleitungen 23, 24 mit den Thyristor-Sätzen 41, 42 verbunden und weisen jeweils eine Drossel 28 auf. Die Thyristorensätze 41 42 sind über eine Laststromkathodenleitung 22 mit der Kathode 39 verbunden.

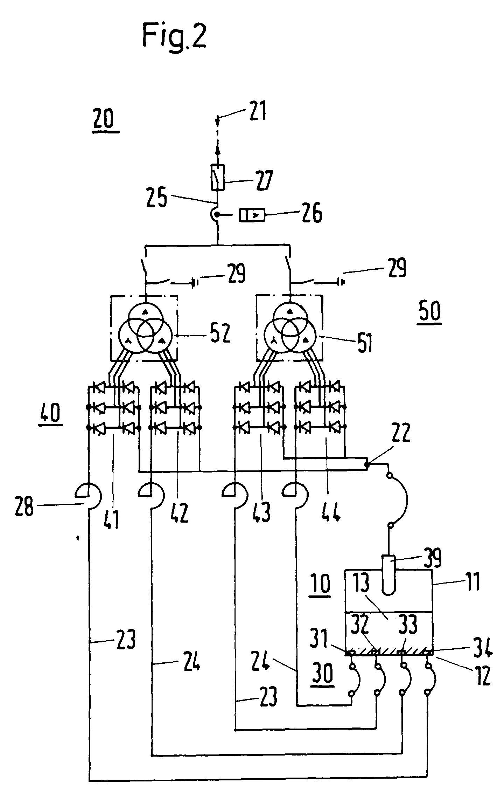

Die Fig. 2 zeigt zwei Trafos, die über vier Thyristoren-Sätzen 41 bis 44 den Strom 12-pulsig gleichrichten und mit vier Bodenelektroden 31 bis 34 jeweils über die Laatstromleitungen 23, 24 verbunden sind. Jede Laststromleitung 23, 24 besitzt eine Drossel 28. Die Thyristoren-Sätze 41 bis 44 sind über die Laststromkathodenleitung 22 mit der Kathode 39 verbunden.

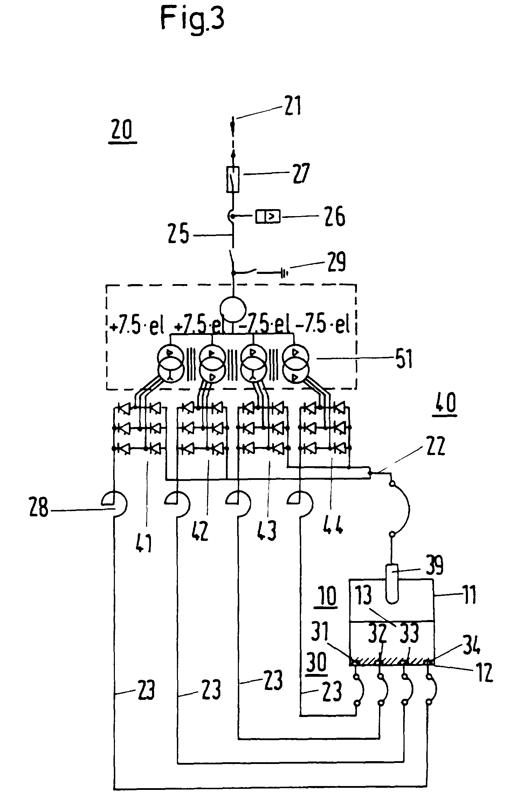

Die Fig. 3 weist einen Transformator 51 auf, der mit Thyristor-Sätzen 41 bis 44 verbunden ist, die den Strom 24-pulsig gleichrichten. Die Thyristoren-Sätze 41 bis 44 sind über Laatstromanodenleitungen 23 mit Bodenelektroden 31 bis 34 verbunden und besitzen jeweils eine Drossel 28. Die Kathode 39 ist über die Laatstromleitungen 22 mit den Thyristor-Sätzen 41 bis 44 verbunden.

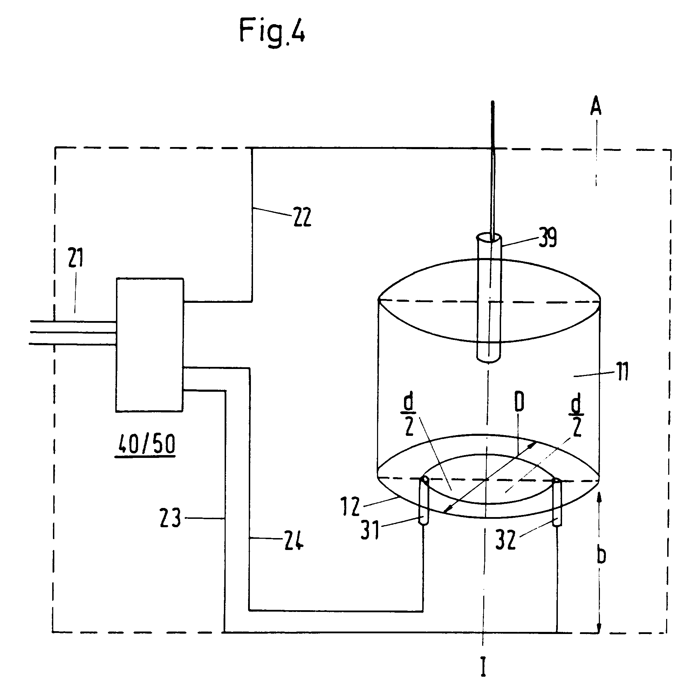

Die Fig. 4 zeigt ein Ofengefäß 11, in das eine Kathode 39 hineinragt. Die Kathode 39 ist über die Laststromkathodenleitung 22 mit nicht weiter dargestellten Gleichrichtungeinrichtung (Thyristor-Brücken 40, Transformatoren 50) verbunden, zu der Drehstromleitungen 21 führen. Sekundärseitig sind noch Laststromleitungen 23, 24 vorhanden, die zu den am Gefäßboden 12 angeordneten Elektroden 31, 32 geführt werden.

Die Anoden 31, 32 sind dabei auf einem Teilkreis mit einem Durchmesser d im Gefäßboden 12 mit dem Ofengefäßdurchmesser D.

In der Fig. 4 ist eine Ebene A dargestellt, die das Ofengefäß 11 mittig schneidet und durch die Kathodenmittenachse I führt. Die Stromzu- und -abführungen erfolgen über die Laststromleitungen 22 bis 24, die in ihrem Gesamtverlauf in der Ebene A angeordnet sind. Die Laatstromanodenleitungen 23, 24 sind dabei lotrecht vom Gefäßboden 12 bis zu einem Abstand b weggeführt, um dann seitlich in der Ebene A zu den Thyristor-Brücken 40 geführt zu werden.

### Positionsliste

- 10: Gleichstromlichtbogenofen
- 11: Gefäß
- 12: Gefäßboden
- 13: Schmelze
- 20: Energieversorgung
- 21: Drehstromzuleitung
- 22: Laststrom-Kathoden-Leitung
- 23: Laststrom-Anoden-Leitung 1
- 24: Laststrom-Anoden-Leitung 2
- 25: primärseitige Leitung
- 26: Meßeinrichtung primär
- 27: Schalter
- 28: Drossel
- 29: Erdungsschalter
- 30: Elektroden
- 31: Anode 1
- 32: Anode 2
- 33: Anode 3
- 34: Anode 4
- 39: Kathode
- 40: Thyristor-Brücke 6-pulsig
- 41: Thyristor-Satz 1
- 42: Thyristor-Satz 2
- 43: Thyristor-Satz 3
- 44: Thyristor-Satz 4
- 50: Transformatoren
- 51: Transformator 1
- 52: Transformator 2
- A: Ebene
- D: Ofengefäßdurchmesser
- d: Teilkreisdurchmesser
- I: Kathodenmittenachse
- b: lotrechter Abstand zur Anode

## Patentansprüche

1. Gleichstromlichtbogenofen (10) mit einer in das Ofengefäß (11) hineinragenden,als Kathode ausgebildeten Elektrode (39) und mindestens zwei Bodenelektroden (31,32) sowie steuerbaren Gleichrichtem (40) ,die über Stromleitungen (23,24) mit den Bodenelektroden (31,32) verbunden sind,wobei als Gleichrichter (40) mindestens zwei 6-pulsige Thyristor -Sätze (41,42) eingesetzt werden, wobei
2,3 oder 4 von 6-pulsigen Thyristor-Sätzen (41,42) pro Transformator (50) als Gleichrichter (40) zum Einsatz kommen,deren positiver Lastausgang über separate Stromleitungen (23,24) zu den einzelnen Bodenelektroden (31,32) geführt wird, dadurch gekennzeichnet,
daß die Bodenelektroden (31,32) auf einem gemeinsamen Teilkreis senkrecht zur Kathoden-Mittenachse (I) angeordnet sind,wobei jeweils zwei Bodenelektroden sich gegenüberliegen und den gleichen Abstand (d/2) zur Kathoden-Mittenachse (I) aufweisen und
daß ein Stromleiter (22) zu der Kathode (39) und die Stromleiter (23,24) zu den Bodenelektroden (31,32) in einer gemeinsamen Ebene (A) geführt sind.

2. Gleichstromlichtbogenofen nach Anspruch 1, dadurch gekennzeichnet,daß der Teilkreis einen Durchmesser (d) von 0,3 bis 0,6 des Gefäßdurchmessers (D) aufweist.

3. Gleichstromlichtbogenofen nach Anspruch 2,dadurch gekennzeichnet,daß der Teilkreis symmetrisch zur Ofenachse angeordnet ist.

4. Gleichstromlichtbogenofen nach Anspruch 2 oder 3,dadurch gekennzeichnet,daß der Teilkreismittelpunkt auf einer Achse Transformator (50)/ Ofenmitte in einem Abstand zur Kathodenmittenachse (1) bis zu maximal dem halben Teilkreisdurchmesser (d) liegt.

5. Gleichstromlichtbogenofen nach Anspruch 2,dadurch gekennzeichnet, daß jeweils zwei Thyristor-Sätze (41,42) auf eine gemeinsame Bodenelektrode geführt sind.

6. Gleichstromlichtbogenofen nach Anspruch 1, dadurch gekennzeichnet, daß die Stromleitungen (23,24) zu den Bodenelektroden (31,32) eine Länge von (b) von größer 2m lotgerecht von dem Boden (12) des Ofengefäßes (11) geführt sind.

7. Gleichstromlichtbogenofen nach einem der Ansprüche 1 bis 6, dadurch gekennzeichnet, daß der Werkstoff der Stromzufuhrleitungen (22 bis 24) Kupfer und Aluminium ist.

8. Gleichstromlichtbogenofen nach Anspruch 7,dadurch gekennzeichnet,daß die Stromzufuhrleitungen (22 bis 24) Hohlräume zur Durchleitung eines Fluids aufweisen.

## Claims

1. Direct current arc furnace (10) comprising an electrode (39) formed as a cathode projecting into the furnace vessel (11) and at least two base electrodes (31, 32) and controllable rectifiers (40), which are connected to the base electrodes (31, 32) via current conductors (23, 24), wherein as a rectifier (40) at least two 6-pulse thyristor sets (41, 42) are used, wherein 2, 3 or 4 6-pulse thyristor sets (41, 42) per transformer (50) are used as rectifiers (40), whose positive load output is guided to the individual base electrodes (31, 32) via separate current leads (23, 24), characterised in that the base electrodes (31, 32) are disposed on a common partial circle, perpendicular to the cathode central axis (I), wherein two base electrodes respectively oppose one another and have the same distance (d/2) from the cathode central axis (I), and
a current conductor (22) is guided to the cathode (39) and the current conductors (23, 24) are guided to the base electrodes (31, 32) in a common plane (A).

2. Direct current arc furnace according to claim 1, characterised in that the partial circle has a diameter (d) of 0.3 to 0.6 of the vessel diameter (D).

3. Direct current arc furnace according to claim 2, characterised in that the partial circle is symmetrical to the furnace axis.

4. Direct current arc furnace according to claim 2 or 3, characterised in that the partial circle mid-point lies on an axis between the transformer (50) and the furnace centre at a distance from the cathode central axis (I) of up to a maximum of half the partial circle diameter (d).

5. Direct current arc furnace according to claim 2, characterised in that two thyristor sets (41, 42) are guided on a common base electrode.

6. Direct current arc furnace according to claim 1, characterised in that the current conductors (23, 24) to the base electrodes (31, 32) have a length (b) of greater than 2m vertically from the base (12) of the furnace vessel (11).

7. Direct current arc furnace according to one of claims 1 to 6, characterised in that the material of the current supply lines (22 to 24) is copper and aluminium.

8. Direct current arc furnace according to claim 7, characterised in that the current supply lines (22 to 24) have gaps for the passage of a fluid.

## Revendications

1. Four à arc à courant continu (10) comportant une électrode (39) faisant saillie à l'intérieur de la carcasse du four (11) et réalisée sous forme de cathode, et au moins deux électrodes de fond (31,32), ainsi que des redresseurs commandables (40) qui sont reliés par l'intermédiaire de liaisons de courant (23, 24) aux électrodes de fond (31,32), au moins deux groupes de thyristor (41, 42) à six impulsions étant utilisés comme redresseur (40), 2, 3 ou 4 groupes de thyristor (41, 42) à six impulsions étant utilisés par transformateur (50) comme redresseur (40), dont la sortie de charge positive étant amenée par l'intermédiaire de liaisons de courant séparées (23, 24) aux électrodes de fond individuelles (31, 32),
caractérisé en ce que les électrodes de fond (31, 32) sont agencées sur un cercle d'électrodes commun, perpendiculairement à l'axe central (I) de la cathode, deux électrodes de fond étant à chaque fois opposées et présentant le même écartement (d/2) par rapport à l'axe central (I) de la cathode, et en ce qu'un conducteur de courant (22) pour la cathode (39) et les liaisons de courant (23, 24) pour les électrodes de fond (31,32) sont guidés, dans un plan commun (A).

2. Four à arc à courant continu selon la revendication 1,
caractérisé en ce que le cercle d'électrodes présente un diamètre (d) de 0,3 à 0,6 fois le diamètre (D) de la carcasse.

3. Four à arc à courant continu selon la revendication 2,
caractérisé en ce que le cercle d'électrodes est agencé symétriquement à l'axe du four.

4. Four à arc à courant continu selon l'une des revendications 2 ou 3,
caractérisé en ce que le centre du cercle d'électrodes est situé sur un axe entre le transformateur (50) et le centre du four, à une distance de l'axe central (I) de la cathode correspondant au maximum à la moitié du diamètre (d) du cercle d'électrodes.

5. Four à arc à courant continu selon la revendication 2,
caractérisé en ce qu'à chaque fois deux groupes de thyristor (41,42) sont guidés sur une électrode de fond commune.

6. Four à arc à courant continu selon la revendication 1,
caractérisé en ce que les liaisons de courant (23,24) vers les électrodes de fond (31,32) sont guidées sur une longueur (b) de plus de 2 mètres, perpendiculairement au fond (12) de la carcasse du four (11).

7. Four à arc à courant continu selon l'une des revendications 1 à 6,
caractérisé en ce que le matériau des liaisons de courant (22 à 24) est du cuivre et de l'aluminium.

8. Four à arc à courant continu selon la revendication 7,
caractérisé en ce que les liaisons de courant (22 à 24) présentent des espaces creux pour le passage d'un fluide.
